# EUROPEAN PATENT APPLICATION

(11) **EP 3 409 963 A1**
(43) Date of publication of application: **05.12.2018**
(21) Application number: 18173730.5
(22) Date of filing: 23.05.2018
(51) Int. Cl.: F16C 33/78, F16J 15/3264

(54) **ROTARY SEAL**

(30) Priority: 31.05.2017 JP 2017108006
(71) Applicant: Nakanishi Metal Works Co., Ltd., Osaka-shi Osaka 530-8566 (JP)
(72) Inventor: SATO, Takahiko, Osaka, Osaka 530-8566 (JP); AKASHI, Shinichi, Osaka, Osaka 530-8566 (JP); IIZAWA, Yusuke, Osaka, Osaka 530-8566 (JP)
(74) Representative: Betten & Resch

(57) **Abstract**

There is provided a rotary seal capable of delaying a progress of corrosion of a steel-made member without increasing manufacturing cost even when a solution containing an electrolyte is present around a contact portion between a stainless steel-made member and the steel-made member. At least one of (i) a metal fitting portion (A) between a sleeve (2A) of a stainless steel-made slinger (2) of a rotary seal (1A) and an inner ring (12) that is a steel-made radially inner member, and (ii) an outside-air side surface of the slinger (2), which includes an outside-air side end portion of the fitting portion (A), is provided with at least one of a silane-based adhesive layer containing powder of metal having a higher ionization tendency than iron, a thermosetting resin adhesive layer containing powder of metal having a higher ionization tendency than iron, and a coating film containing powder of metal having a higher ionization tendency than iron. Even when the solution containing the electrolyte is present on an outside air side of the fitting portion (A), the powder of the metal having a higher ionization tendency than iron, the powder being contained in the adhesive layer or the coating film, corrodes first instead of the inner ring (12) that is a steel-made member.

## Description

### BACKGROUND OF THE INVENTION

### (1) Field of the Invention

The present invention relates to a rotary seal having a metal fitting portion between the rotary seal itself and a member to which the rotary seal is to be attached, the rotary seal being for use in a transport machine or a general machine and the like.

### (2) Description of Related Art

As a rotary seal for use in a bearing device or the like for supporting a wheel of an automobile, there is a rotary seal, which includes a slinger including a sleeve and a flange extending from one end of the sleeve, and is used with the sleeve attached to a rotating-side member (see, for example, the bearing seal 11 of Japanese Patent No. 5430026).

Such a rotary seal is given air tightness (resistance to water penetration) by a metal fitting portion made of the sleeve (see, for example, the cylindrical portion 14a of Japanese Patent No. 5430026) of the metallic slinger and the metallic rotating-side member (for example, the inner ring member 6 of the inner ring 7 of Japanese Patent No. 5430026).

In the rotary seal 11 of Japanese Patent No. 5430026, an elastic seal member that is an elastic annular seal portion 14d obtained by applying and curing an elastomer agent is formed integrally with a region located at a corner portion on a rear end portion in a fitting direction when the cylindrical portion 14a of the slinger 14 is fitted. In this way, the air tightness at such a metal fitting portion is maintained. Then, the elastic seal member prevents muddy water or the like from penetrating the fitting portion, thereby suppressing rusting of the metal fitting portion described above.

### SUMMARY OF THE INVENTION

In a configuration of the rotary seal made by forming the elastic seal member integrally with such a region located at the corner portion of the rear end portion in the fitting direction when the cylindrical portion 14a of the slinger 14 as in Japanese Patent No. 5430026 is fitted, the elastic seal member prevents the penetration of muddy water or the like into the metal fitting portion, thus making it possible to suppress the rusting of such a fitting portion as described above. Therefore, a life of the bearing device can be lengthened.

However, such provision of the elastic seal member on the rotary seal increases manufacturing cost of the rotary seal.

In contrast, in a configuration of a rotary seal with no provision of the elastic seal member, the rusting of the metal fitting portion is promoted particularly when a solution containing an electrolyte is present around a contact portion between a stainless steel-made slinger and a steel-made inner ring, that is, for example when muddy water or the like, which contains an antifreezing agent such as calcium chloride and sodium chloride, is present around the contact portion in a cold district. That is, when the stainless steel-made slinger and the steel-made inner ring are fitted to each other, since both of the slinger and the inner ring have different ionization tendencies, and stainless steel has a smaller ionization tendency than iron, the steel-made inner ring having a large ionization tendency becomes a negative electrode (anode), and the inner ring ionizes into the solution and melts out. As a result, corrosion of the inner ring progresses.

If this state continues, then a problem arises that the steel-made inner ring intensively corrodes and the air tightness of the fitting portion of the slinger and the inner ring deteriorates, and the life of the bearing device is shortened.

The present invention has been made in view of the above circumstances and problem. It is an object of the present invention to provide a rotary seal capable of delaying the progress of the corrosion of the steel-made member even when the solution containing the electrolyte is present around the contact portion between the stainless steel-made member and the steel-made member without increasing the manufacturing cost unlike the configuration of providing the elastic seal member.

In order to solve the above problem, a rotary seal according to the present invention is a rotary seal including:
a stainless steel-made slinger including a cylindrical sleeve and a flange extending radially outward from one end in an axial direction of the sleeve;
a core metal including a core metal cylinder that is cylindrical and a core metal flange extending radially inward from one end in an axial direction of the core metal cylinder; and
a seal member including a base portion joined to the core metal and a seal lip portion extending from the base portion,
wherein the rotary seal is used in a state where the sleeve is attached to a steel-made radially inner member and the core metal cylinder is attached to a steel-made radially outer member, and
at least one of (i) a metal fitting portion between the sleeve and the radially inner member, and (ii) an outside-air side surface of the slinger including an outside-air side end portion of the metal fitting portion, is provided with at least one of a silane-based adhesive layer containing powder of metal having a higher ionization tendency than iron, a thermosetting resin adhesive layer containing powder of metal having a higher ionization tendency than iron, and a coating film containing powder of metal having a higher ionization tendency than iron (claim 1).

Here, it is also a preferable aspect that the core metal is made of stainless steel, and
at least one of (i) a metal fitting portion between the core metal cylinder and the radially outer member, and (ii) an outside-air side surface of the core metal including an outside-air side end portion of the fitting portion, is provided with at least one of the silane-based adhesive layer containing powder of metal having a higher ionization tendency than iron, the thermosetting resin adhesive layer containing powder of metal having a higher ionization tendency than iron, and the coating film containing powder of metal having a higher ionization tendency than iron (claim 2).

Moreover, in order to solve the above problem, a rotary seal according to the present invention is a rotary seal including:
a stainless steel-made core metal including a core metal cylinder that is cylindrical and a core metal flange extending radially inward or outward from one end in an axial direction of the core metal cylinder; and
a seal member including a base portion joined to the core metal and a seal lip portion extending from the base portion,
wherein the rotary seal is used in a state where the core metal cylinder is attached to a steel-made radially outer member or a steel-made radially inner member, and
at least one of (i) a metal fitting portion between the core metal cylinder and the radially outer member or between the core metal cylinder and the radially inner member, and (ii) an outside-air side surface of the core metal including an outside-air side end portion of the metal fitting portion, is provided with at least one of a silane-based adhesive layer containing powder of metal having a higher ionization tendency than iron, a thermosetting resin adhesive layer containing powder of metal having a higher ionization tendency than iron, and a coating film containing powder of metal having a higher ionization tendency than iron (claim 3).

In accordance with the configuration of the rotary seal according to each of claims 1 to 3, in the rotary seal attached to the radially inner member and the radially outer member or the rotary seal attached to either one of the radially inner member and the radially outer member, at least one of (i) the metal fitting portion between the stainless steel-made member and the steel-made member, and (ii) the outside-air side surface of the slinger including the outside-air side end portion of the fitting portion or the outside-air side surface of the core metal including the outside-air side end portion of the fitting portion, is provided with at least one of the silane-based adhesive layer containing powder of metal having a higher ionization tendency than iron, the thermosetting resin adhesive layer containing powder of metal having a higher ionization tendency than iron, and the coating film containing powder of metal having a higher ionization tendency than iron.

When the metal fitting portion is provided with the adhesive layer or the coating film, which contains powder of metal having a higher ionization tendency than iron, then the powder of the metal having a higher ionization tendency than iron, the powder being contained in the adhesive layer, is present in the fitting portion of the steel-made member having a higher ionization tendency and the stainless steel-made member having a smaller ionization tendency. As a result, even when the solution containing the electrolyte is present on the outside air side of the metal fitting portion, the powder of the metal having a higher ionization tendency than iron, the powder being contained in the adhesive layer, corrodes first instead of the steel-made member, and therefore, the progress of the corrosion of the steel-made member can be delayed.

When the slinger including the outside-air side end portion of the metal fitting portion or the outside-air side surface of the core metal is provided with the adhesive layer or the coating film, which contains powder of metal having a higher ionization tendency than iron, then the powder of the metal having a higher ionization tendency than iron, the powder being contained in the adhesive layer or the coating film, is present near the outside-air side end portion of the fitting portion of the steel-made member having a higher ionization tendency than iron and the stainless steel-made member having a smaller ionization tendency. As a result, even when the solution containing the electrolyte is present on the outside air side of the metal fitting portion, the powder of the metal having a higher ionization tendency than iron, the powder being contained in the adhesive layer or the coating film, corrodes first instead of the steel-made member, and therefore, the progress of the corrosion of the steel-made member can be delayed.

Therefore, an occurrence of a defect that the corrosion of the steel-made member progresses to lower the air tightness of such a metal fitting portion as above can be suppressed, whereby reduction in the life of the bearing device or the like, to which the rotary seal is attached, can be suppressed.

In addition, the adhesive layers or the coating film, which contains the powder of the metal having a higher ionization tendency and is provided on at least one of (i) the metal fitting portion, and (ii) the outside-air side surface of the slinger including the outside-air side end portion of the fitting portion or the outside-air side surface of the core metal including the outside-air side end portion of the fitting portion, can be formed by applying the silane-based adhesive or the thermosetting resin adhesive in a state where the adhesive is mixed with the powder of the metal having a higher ionization tendency than iron, or applying the paint in a state where the paint is mixed with the powder of the metal having a higher ionization tendency than iron.

Therefore, it is unnecessary to additionally form the elastic seal member as in Japanese Patent No. 5430026, so that the manufacturing cost is not increased.

Here, it is also a preferable aspect that the metal having a higher ionization tendency than the iron is zinc, aluminum, or magnesium, and each of the silane-based adhesive layer, the thermosetting resin adhesive layer, and the coating film contains one kind or a plurality of kinds of powders of the zinc, the aluminum, and the magnesium (claim 4).

In accordance with such a configuration, powders of zinc, aluminum, and magnesium are inexpensive and easily available, and these powders are excellent in dispersibility when used in an appropriate amount, and those having a well-distributed particle size are available. Therefore, the powders are easy to use in a form of being contained in the adhesive or the paint.

In addition, since the powder of the metal having a higher ionization tendency than iron is inexpensive, an increase in manufacturing cost can be suppressed.

Moreover, it is also a preferable aspect that each of the silane-based adhesive layer, the thermosetting resin adhesive layer, and the coating film contains the powder of the metal having a higher ionization tendency than the iron, a content of the powder when dried being 75% by weight or more and 98% by weight or less (claim 5).

In accordance with such a configuration, the content of the powder when dried is set to 75% by weight or more and 98% by weight or less, whereby, when the solution containing the electrolyte is present around the contact portion between the stainless steel-made member and the steel-made member, an effect of delaying the progress of corrosion develops. The content of the powder is increased as much as possible within this range, whereby the effect of delaying the progress of corrosion of the steel-made member can be maintained for a long period.

Moreover, the content of the powder when dried is set to 98% by weight or less, whereby an occurrence of unevenness during application work, which is caused by poor distribution of the powder due to precipitation, can be suppressed.

As described above, the rotary seal according to the present invention mainly produces the following effects.
(1) Even when the solution containing the electrolyte is present on the outside air side of the metal fitting portion of the stainless steel-made member and the steel-made member, the powder of the metal having a higher ionization tendency than iron, the powder being contained in the silane-based adhesive layer, or the thermosetting resin adhesive layer or the coating film, corrodes first instead of the steel-made member, and therefore, the progress of the corrosion of the steel-made member can be delayed.
(2) The occurrence of the defect that the corrosion of the steel-made member progresses to lower the air tightness of the metal fitting portion as described above can be suppressed, whereby the reduction in the life of the bearing device or the like, to which the rotary seal is attached, can be suppressed.
(3) The adhesive layer or the coating film, which contains the powder of the metal having a higher ionization tendency than iron, can be formed by applying the silane-based adhesive or the thermosetting resin adhesive in a state where the adhesive is mixed with the powder of the metal having a higher ionization tendency than iron, or applying the paint in a state where the paint is mixed with the powder of the metal having a higher ionization tendency than iron. Therefore, it is unnecessary to additionally form the elastic seal member as in Japanese Patent No. 5430026, so that the manufacturing cost is not increased.

### BRIEF DESCRIPTION OF THE DRAWINGS

FIG. 1 is a partial longitudinal cross-sectional schematic view showing an example in which a rotary seal according to an embodiment of the present invention is used for a bearing device for supporting a wheel of an automobile;
FIG. 2 is an enlarged longitudinal cross-sectional view of a main part of an inward rotary seal;
FIG. 3 is an enlarged longitudinal cross-sectional view of a main part of an outward rotary seal;
FIG. 4 is an enlarged longitudinal cross-sectional view of a main part of a test fixture;
FIG. 5 is photographs showing progress of rust for each of Example 2 and Comparative examples 1 and 3;
FIG. 6 is an end view of a cut portion taken along a plane including an axial direction, showing an example of an application range of an adhesive to a slinger;
FIG. 7 is an end view of the cut portion, showing another example of the application range;
FIG. 8 is an end view of the cut portion, showing still another example of the application range;
FIG. 9 is an end view of the cut portion, showing yet another example of the application range;
FIG. 10 is an end view of the cut portion, showing a further example of the application range; and
FIG. 11 is an end view of the cut portion, showing a still further example of the application range.

### DETAILED DESCRIPTION OF PREFERRED EMBODIMENT

Next, an embodiment of the present invention will be described in detail with reference to the accompanying drawings; however, the present invention is not limited to the embodiment shown in the accompanying drawings and includes all the embodiments satisfying requirements described in the claims.

Note that, in the present description, when a rotary seal is attached, a direction of a rotation axis of a radially inner member that is a member on a rotation side will be referred to as "axial direction", and a direction orthogonal to the axial direction will be referred to as "radial direction".

A direction from a vehicle body of an automobile toward a wheel will be referred to as "outward", and a direction opposite thereto will be referred to as "inward".

### <Structure Example of Bearing Device Using Rotary Seal>

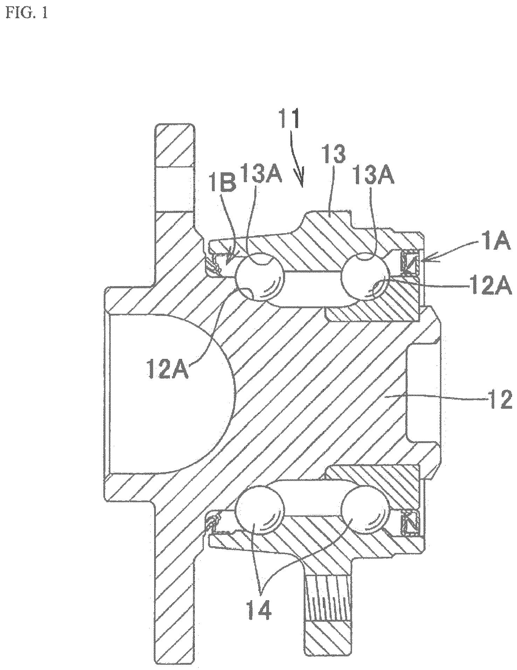

A partial longitudinal cross-sectional schematic view in FIG. 1 shows an example in which rotary seals 1A and 1B according to the embodiment of the present invention are used for a bearing device 11 for supporting a wheel of an automobile.

The bearing device 11 includes: a bearing having: an inner ring 12 in which an inner ring raceway surface 12A is formed on an outer circumferential surface, the inner ring 12 rotating together with the wheel; an outer ring 13 in which an outer raceway surface 13A is formed on an inner circumferential surface, the outer ring 13 being integral with a vehicle body; balls 14, 14, ... which are rolling elements rolling between the inner ring raceway surface 12A and the outer ring raceway surface 13A; and the like.

Moreover, the bearing device 11 includes the rotary seals 1A and 1B, which prevent penetration of muddy water or the like and leakage of lubricating grease, on inward and outward end portions (inward of the inward balls 14, ... and outward of the outward balls 14, ...) between the inner ring 12 and the outer ring 13.

### <Structure Example of Rotary Seal>

### (Inward rotary seal)

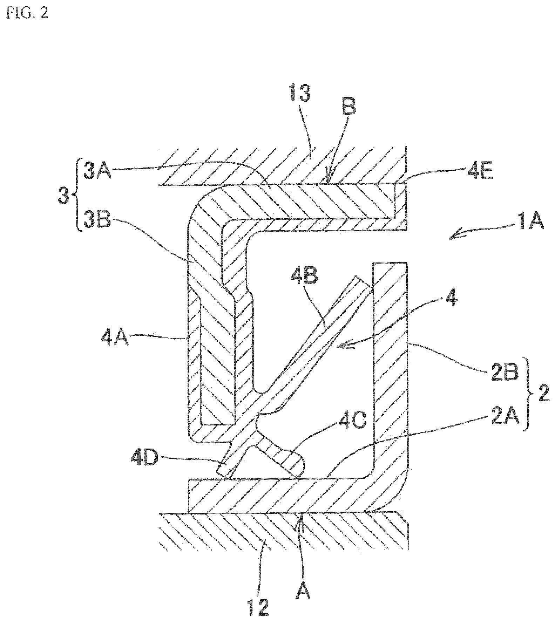

As shown in an enlarged longitudinal cross-sectional view of a main part in FIG. 2, the inward rotary seal 1A according to the embodiment of the present invention includes: a slinger 2 made of a stainless steel plate by presswork; a core metal 3 made of a stainless steel plate by presswork; and a seal member 4 that is an elastic body such as rubber and is integrated with the core metal 3.

The slinger 2 includes a cylindrical sleeve 2A and a flange 2B extending radially outward from one end in an axial direction of the sleeve 2A, and the stainless steel-made sleeve 2A is attached to the inner ring 12 that is a steel-made radially inner member.

The core metal 3 includes a core metal cylinder 3A that is cylindrical and a core metal flange 3B extending radially inward from one end in an axial direction of the core metal cylinder 3A, and the stainless steel-made core metal cylinder 3A is attached to the outer ring 13 that is a steel-made radially outer member.

The seal member 4 includes a base portion 4A joined to the core metal 3 and seal lip portions 4B, 4C and 4D extending from the base portion 4A, a tip end of the seal lip portion 4B is brought into sliding contact with an inner surface of the flange 2B of the slinger 2, and tip ends of the seal lip portions 4C and 4D are brought into sliding contact with an outer circumferential surface of the sleeve 2A of the slinger 2. Moreover, the base portion 4A has an outer circumferential seal portion 4E extending outward in a circumferential direction so as to cover the core metal cylinder 3A.

The core metal cylinder 3A of the stainless steel-made core metal 3 is pressed into the outer ring 13 that is a steel-made radially outer member, whereby the core metal 3 and the seal member 4 are fixed to the outer ring 13.

Here, a metal fitting portion B of the core metal 3 and the outer ring 13 is sealed by the outer circumferential seal portion 4E.

The sleeve 2A of the stainless steel-made slinger 2 is pressed into the inner ring 12 that is a steel-made radially inner member, whereby the slinger 2 is fixed to the inner ring 12.

A metal fitting portion A of the slinger 2 and the inner ring 12 is provided with a silane-based adhesive layer containing zinc powder or a thermosetting resin adhesive layer containing zinc powder.

The powder contained in the above adhesive layers is not limited to zinc, and just needs to be metal powder having a higher ionization tendency than iron. Therefore, the powder may be aluminum or magnesium.

Then, the powder contained in the above adhesive layers may be, for example, one kind of zinc, aluminum, magnesium, or the like, or may be a plurality of kinds thereof.

In a form of being contained in an adhesive, such powder of zinc, aluminum, or magnesium is easy to use as the metal powder having a higher ionization tendency than iron since the powder is inexpensive and easily available, and is excellent in dispersibility when used in an appropriate amount, and those having a well-distributed particle size are available.

In addition, since the powder of the metal having a higher ionization tendency than iron is inexpensive, an increase in manufacturing cost can be suppressed.

In a configuration in which the metal fitting portion B of the core metal 3 and the outer ring 13 is not sealed by the outer circumferential seal portion 4E,
It is preferable to provide the metal fitting portion B with the silane-based adhesive layer containing zinc powder or the thermosetting resin adhesive layer containing zinc powder.

In the structural example of the inward rotary seal 1A, the slinger 2 has a single structure, but a magnetic encoder (resin magnet or rubber magnet) may be joined to the slinger 2.

### (Outward rotary seal)

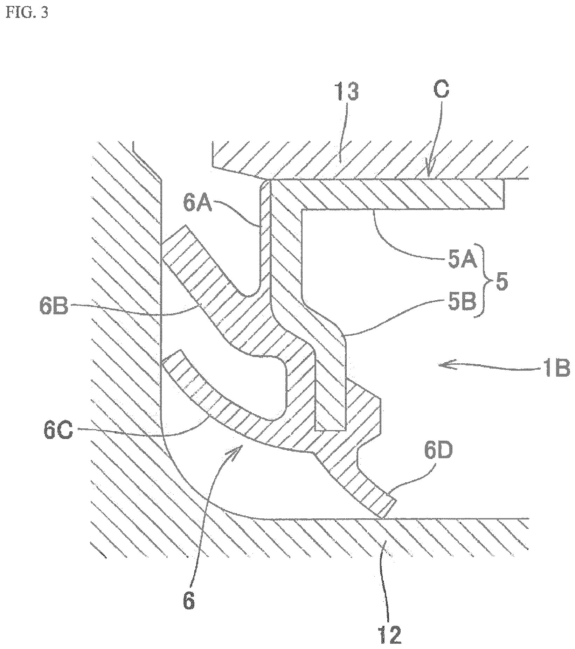

As shown in an enlarged longitudinal cross-sectional view of a main part in FIG. 3, the outward rotary seal 1B according to the embodiment of the present invention includes: a core metal 5 made of a stainless steel plate by presswork; and a seal member 6 that is an elastic body such as rubber and is integrated with the core metal 5.

The core metal 5 includes a core metal cylinder 5A that is cylindrical and a core metal flange 5B extending radially inward from one end in an axial direction of the core metal cylinder 5A, and the stainless steel-made core metal cylinder 5A is attached to the outer ring 13 that is a steel-made radially outer member.

The seal member 6 includes a base portion 6A joined to the core metal 5 and seal lip portions 6B, 6C and 6D extending from the base portion 6A, tip ends of the seal lip portions 6B and 6C are brought into sliding contact with an inner surface of an outward flange of the inner ring 12, and a tip end of the seal lip portion 6D is brought into sliding contact with an outer circumferential surface of the inner ring 12.

The core metal cylinder 5A of the stainless steel-made core metal 5 is pressed into the outer ring 13 that is a steel-made radially outer member, whereby the core metal 5 and the seal member 6 are fixed to the outer ring 13.

A metal fitting portion C of the core metal 5 and the outer ring 13 is provided with the silane-based adhesive layer containing zinc powder or the thermosetting resin adhesive layer containing zinc powder.

Note that such a configuration may be adopted, in which the core metal cylinder 5A of the core metal 5 is attached to the inner ring 12, the core metal flange 5B is made to extend outward in the radial direction from one end in the axial direction of the core metal cylinder 5A, and the core metal 5 and the outer ring 13 are sealed by a seal lip portion. In that case, a metal fitting portion between the core metal cylinder 5A and the inner ring 12 is provided with the silane-based adhesive layer containing zinc powder or the thermosetting resin adhesive layer containing zinc powder.

### (Silane-based adhesive or thermosetting resin adhesive)

Examples of the silane-based adhesive for use in the present invention include those in which a silane coupling agent is dissolved in an organic solvent such as methanol by about 1 to 20% by weight.

Examples of the thermosetting resin adhesive for use in the present invention include a phenol resin-based adhesive and an epoxy resin-based adhesive.

As the phenol resin-based adhesive, for example, there can be used one obtained by dissolving a novolac-type phenolic resin, a resol-type phenolic resin and a curing agent such as hexamethylenetetramine in a solvent such as methanol and methyl ethyl ketone.

Examples of the epoxy resin-based adhesive include an adhesive in which an undiluted solution is a one-pack type epoxy-based adhesive, the adhesive being able to be diluted in a solvent.

### <Method of Providing Metal Fitting Portion with Silane-Based Adhesive Containing Zinc Powder or Thermosetting Resin Adhesive Containing Zinc Powder>

A method for providing the metal fitting portions A and B shown in FIG. 2 with the silane-based adhesive layer containing zinc powder or the thermosetting resin adhesive layer containing zinc powder and a method for providing the metal fitting portion C shown in FIG. 3 therewith are similar to each other. Therefore, the method of providing the metal fitting portion A shown in FIG. 2 with the adhesive layer containing zinc powder will be described as a representative.

### (Adhesive application step)

First, an adhesive application step is performed, in which the silane-based adhesive containing zinc powder or the thermosetting resin adhesive containing zinc powder is applied to one or both of the inner circumferential surface of the sleeve 2A of the slinger 2 and the inner ring 12. Such application of the adhesive can be performed by a brush, a roller, a spray, or the like.

### (Natural drying step or drying/solidifying step)

Next, a natural drying step is performed, in which the solvent contained in the adhesive applied in the adhesive application step is volatilized by natural drying.

Alternatively, a drying/solidifying step is performed, in which the solvent contained in the adhesive applied in the adhesive application step is volatilized under a predetermined temperature condition to dry and solidify the adhesive.

Here, the term "drying/solidifying" when the adhesive is the thermosetting resin adhesive means that the thermosetting resin adhesive is brought into a state before a crosslinking reaction is started by heating, which is also a state in which the solvent contained in advance in the thermosetting resin adhesive at the time of application is volatilized to solidify components of the thermosetting resin adhesive layer.

### (Fitting Step)

Next, a fitting step is performed, in which the sleeve 2A having undergone the natural drying step or the drying/solidifying step is fitted to the inner ring 12. In this way, mounting of the slinger 2 onto the inner ring 12 is completed, and in that state, the metal fitting portion A is provided with the silane-based adhesive layer containing zinc powder or the thermosetting resin adhesive layer containing zinc powder.

A thickness of the adhesive layer containing zinc powder is desirably 1 µm or more and 20 µm or less. When the thickness of the adhesive is less than 1 µm, it is insufficient to ensure the air tightness. Moreover, when the thickness of the adhesive exceeds 20 µm, an amount of the adhesive to be scraped off at the time of the metal fitting is increased, so that the scraped adhesive may possibly become a foreign object and intrude into the bearing.

Note that, when the adhesive is the thermosetting resin adhesive, then after the natural drying step or the drying/solidifying step, and before the fitting step, a baking step may be performed, in which the adhesive is baked at a temperature equal to or higher than a temperature at which the thermosetting resin adhesive initiates the crosslinking reaction.

By such a method as above, the metal fitting portion of the stainless steel member and the steel-made member is provided with the silane-based adhesive layer containing powder of metal having a higher ionization tendency than iron, or the thermosetting resin adhesive layer containing the powder. In this way, the powder of the metal having a higher ionization tendency than iron, the powder being contained in the adhesive layer, is present in the fitting portion of the steel-made member having a higher ionization tendency than iron and the stainless steel-made member having a smaller ionization tendency. As a result, even when a solution containing an electrolyte is present on an outside air side of such a metal fitting portion, the powder of the metal having a higher ionization tendency than iron, the powder being contained in the adhesive layer, corrodes first instead of the steel-made member, and therefore, the progress of the corrosion of the steel-made member can be delayed.

Therefore, an occurrence of a defect that the corrosion of the steel-made member progresses to lower the air tightness of such a metal fitting portion as above can be suppressed, whereby reduction in the life of the bearing device or the like, to which the rotary seal is attached, can be suppressed.

In addition, in the adhesive layer, which is provided in the metal fitting portion and contains the powder of the metal having a higher ionization tendency than iron, the silane-based adhesive or the thermosetting resin adhesive just needs to be applied and so on in a state of being mixed with the powder of the metal having a higher ionization tendency than iron, and it is unnecessary to additionally form the elastic seal member as in Japanese Patent No. 5430026. Therefore, the manufacturing cost is not increased.

### <Effect Checking Test>

Next, a test performed for confirming an effect of the rotary seal of the present invention will be described.

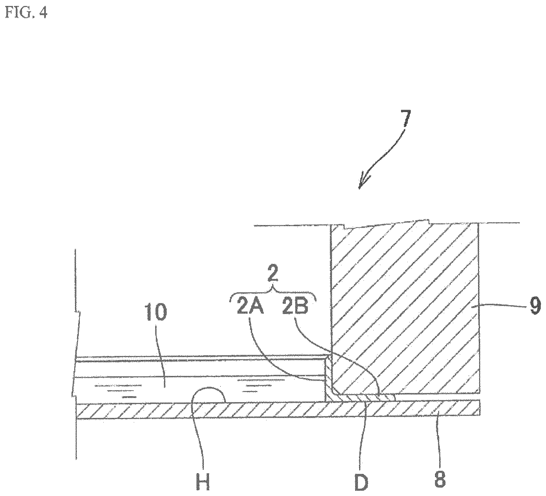

A test was carried out using a test fixture 7 shown in an enlarged longitudinal cross-sectional view of a main part in FIG. 4 in order to evaluate a degree of the corrosion of the steel-made member when a solution containing an electrolyte is present around a metal contact portion between the stainless steel-made member and the steel-made member.

### (Examples and comparative examples)

With regard to the slinger 2 that is a member made of stainless steel (SUS430) placed in the test fixture 7 in FIG. 4, a silane-based adhesive in each of Examples 1 to 3 and Comparative examples 1 to 3, which are described below, was applied to a lower surface of the flange 2B concerned. Then, each of the slingers 2 having the flanges 2B concerned was tested. Here, concentrations of the zinc powder when being compounded are shown.
(1) Example 1: The zinc powder contained in the silane-based adhesive was adjusted to 2.0% by weight.
(2) Example 2: The zinc powder contained in the silane-based adhesive was adjusted to 5.0% by weight.
(3) Example 3: The zinc powder contained in the silane-based adhesive was adjusted to 20.0% by weight.
(4) Comparative example 1: The silane-based adhesive did not contain zinc powder.
(5) Comparative example 2: The zinc powder contained in the silane-based adhesive was adjusted to 0.5% by weight.
(6) Comparative example 3: The zinc powder contained in the silane-based adhesive was adjusted to 1.0% by weight.

### (Test fixture)

(1) A disk-shaped plate material 8 (diameter: 80 mm; thickness: 1 mm), which is a member made of steel (SPCC), is placed on a horizontal plane.
(2) Each of the slingers 2, which are stainless steel (SUS430)-made members applied with the silane-based adhesives of Examples 1 to 3 and Comparative examples 1 to 3 as described above, is mounted on the disk-shaped plate material 8 so that the lower surface of the flange 2B applied with the above adhesive abuts against an upper surface of the disk-shaped plate material 8.
(3) A stainless steel-made annular weight 9, of which weight is 1.5 kg, is mounted on the flange 2B of the slinger 2, and is applied with a load, and the slinger 2 is pressed against the disk-shaped plate material 8.
(4) 5 mL of salt water 10 having a salt concentration of 5% by weight is put in a container-shaped portion formed of the upper surface of the disk-shaped plate material 8 and the inner circumferential surface of the sleeve 2A of the slinger 2.

### (Test method)

The test fixture 7 was placed in an oven under the following test atmosphere, and was left standing for 21 hours while maintaining a temperature thereof at 40°C. Thereafter, regarding each of the above Examples and Comparative examples, a progress of rust on an evaluation surface H that is a contact surface of the upper surface of the disk-shaped plate material 8 with the salt water 10 in FIG. 4 is evaluated.

### (Test atmosphere)

(1) A stainless steel tray with water put therein is placed in the oven to moisturize an inside of the oven.
(2) Two ozone generators are installed in the oven and operated to create an ozone atmosphere.

### (Test results)

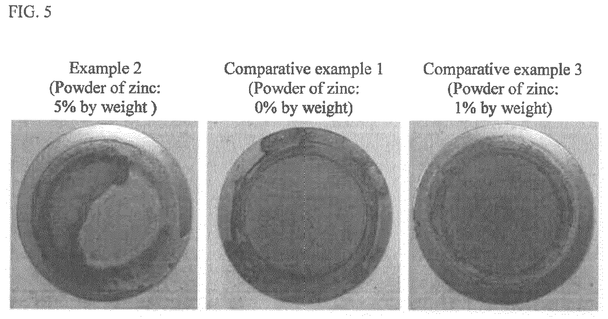

In Examples 1 to 3 (content of zinc powder: 2.0% by weight or more and 20.0% by weight or less when compounded), the progress of rust on the evaluation surface H in FIG. 4 was slow. For example, in Example 2 shown in a photograph showing the progress of rust in FIG. 5, an area where such rust occurred was less than a half of an area of the evaluation surface H.

In contrast, in Comparative examples 1 to 3 (content of zinc powder: 1.0% by weight or less when compounded), the progress of rust on the evaluation surface H in FIG. 4 was fast. For example, in each of Comparative example 1 and Comparative example 3 shown in photographs showing the progress of rust in FIG. 5, such rust occurred on the entire surface of the evaluation surface H.

From the above test results, it is found out that, if the content of the zinc powder contained in the silane-based adhesive is in a range of 2.0% by weight or more and 20.0% by weight or less when compounded (75% by weight or more and 98% by weight or less when dried), then the effect of delaying the progress of the corrosion of the steel-made member surely develops when the solution containing the electrolyte is present around the contact portion between the stainless steel-made member and the steel-made member. Then, the content of the powder is increased as large as possible within this range, whereby the effect of delaying the progress of the corrosion of the steel-made member can be maintained for a long time.

Here, the content of the zinc powder contained in the silane-based adhesive is set to 20.0% by weight at compounding (98% by weight when dried), whereby an occurrence of unevenness during application work, which is caused by poor distribution of the powder due to precipitation, can be suppressed.

Moreover, the findings obtained from the results of the above effect checking test are also applied to the metal fitting portions A, B and C when the slinger 2, the core metal 3 and the core metal 5 are actually used as in FIG. 1 to FIG. 3.

### <Example of Adhesive Application Range>

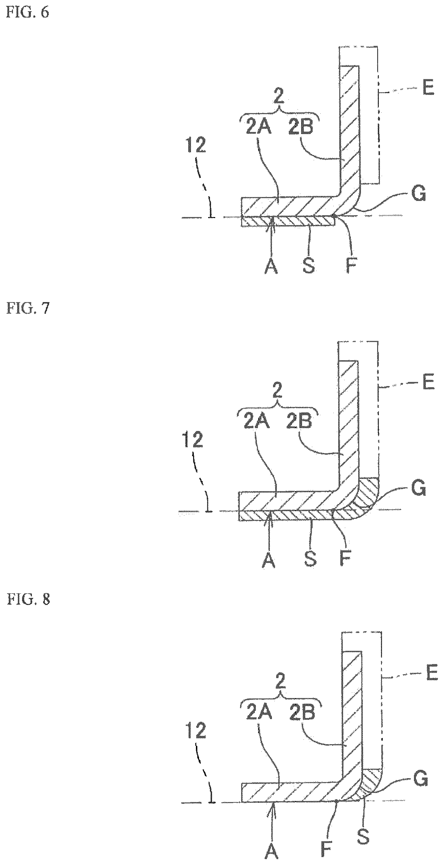

End views of a cut portion, which are shown in FIGS. 6 to 11, show examples of a range of an adhesive layer S that is a range of applying, to the slinger 2, the silane-based adhesive or the thermosetting resin adhesive, which contains the powder of the metal having a higher ionization tendency than iron, while exaggerating a thickness of the adhesive layer S.

Note that, in the slinger 2 of the rotary seal, there are cases where a magnetic encoder E is joined to the flange 2B and where the magnetic encoder E is not present.

FIG. 6 shows an example in which the adhesive layer S is provided only on the metal fitting portion A, and FIG. 7 shows an example in which an adhesive layer S is provided on the metal fitting portion A and an outside-air side surface G (for example, up to an inner circumferential surface of the magnetic encoder E) of the slinger 2, the outside-air side surface G including an outside-air side end portion F of the fitting portion A.

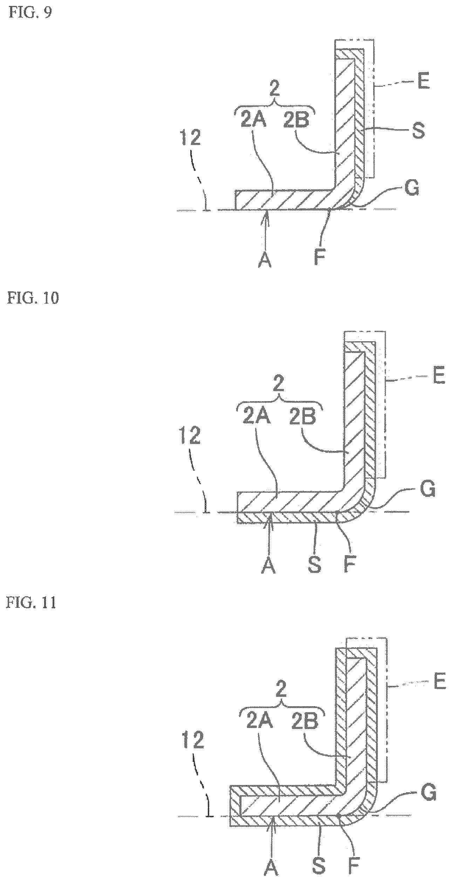

FIGS. 8 and 9 show examples in which the adhesive layer S is not provided on the metal fitting portion A. FIG. 8 shows an example in which the adhesive layer S is provided on the outside-air side surface G (for example, up to the inner circumferential surface of the magnetic encoder E) of the slinger 2, the outside-air side surface G including the outside-air side end portion F of the fitting portion A, and FIG. 9 shows an example in which the adhesive layer S is further provided up to the outer circumferential surface of the flange 2B in addition to FIG. 8.

Note that, in such examples as shown in FIGS. 8 and 9, the adhesive layer S may be applied to the fitting portion A.

In such examples as shown in FIGS. 8 and 9, since the powder of the metal having a large ionization tendency in the adhesive layer S in each of FIGS. 8 and 9 corrodes first, the rust to be generated in the steel-made bearing member can be guided to the outside of the bearing, and the progress of the rust to the inside of the bearing can be delayed.

FIG. 10 shows an example in which the adhesive layer S is provided within the range of the adhesive layer in FIG. 6 and the range of the adhesive layer in FIG. 9, and FIG. 11 shows an example in which the adhesive layer S is provided on the entire surface of the slinger 2.

The application of the adhesive for forming the adhesive layer S as shown in each of FIGS. 6 to 10 can be carried out by a brush, a roller, a spray, or the like. Such an adhesive layer S as shown in FIG. 11 can be formed by dip treatment of immersing the slinger 2 in the adhesive stored in a tank.

Even when the adhesive layer S is not provided on the metal fitting portion A as shown in each of FIGS. 8 and 9, the adhesive layer S containing the powder of the metal having a higher ionization tendency than iron is provided on the outside-air side surface G of the slinger 2, the outside-air side surface G including the outside-air side end portion F of the fitting portion A.

Therefore, when the solution containing the electrolyte is present on the outside air side of the metal fitting portion A, the powder of the metal having a higher ionization tendency than iron, the powder being contained in the adhesive layer S, corrodes first instead of the steel-made member (inner ring 12), and therefore, the progress of the corrosion of the steel-made member (inner ring 12) can be delayed.

The rotary seal of the present invention just needs to include the silane-based adhesive layer containing the powder of the metal having a higher ionization tendency than iron or the thermosetting resin adhesive layer containing the powder of the metal having a higher ionization tendency than iron on at least one of (i) the metal fitting portion between the stainless steel-made member and the steel-made member, and (ii) the outside-air side surface of the slinger including the outside-air side end portion of the fitting portion or the outside-air side surface of the core metal including the outside-air side end portion of the fitting portion. It is a more preferable aspect that the adhesive layer be provided on both of the slinger including the fitting portion and the outside-air side end portion of the fitting portion and the outside-air side surface of the core metal.

A coating film may be provided instead of the adhesive layer S in the above description of the embodiment. For example, the coating film can be formed instead of the adhesive layer S in each of FIGS. 6 to 11 by applying required paint in a state where the powder of the metal having a higher ionization tendency than iron is mixed in the paint.

As described above, the adhesive or the paint, which contains the powder of the metal having a higher ionization tendency than iron, is used, whereby the adhesive layer or the coating film can be readily formed only on a specific portion such as the stainless steel-made slinger.

When the coating film is provided instead of the adhesive layer S, a content of the powder of the metal is 50% by weight or more and 98% by weight or less when dried, preferably 75% by weight or more and 98% by weight or less when dried.

Here, a general purpose of antirust paint is to protect steel-made objects such as outdoor structures including bridges, vessels, and inner surfaces of tanks from corrosion by sacrificial corrosion protection. In contrast, a purpose of the antirust paint in the present invention is to first corrode the powder of the metal having a higher ionization tendency than iron, the powder being contained in the coating film, thereby delaying the corrosion of the steel-made member under a special condition that calcium chloride, sodium chloride and the like are present in the portion where the stainless steel-made member and the steel-made member are fitted to each other (members with different ionization tendencies are fitted to each other).

## Claims

1. A rotary seal comprising:
a stainless steel-made slinger including a cylindrical sleeve and a flange extending radially outward from one end in an axial direction of the sleeve;
a core metal including a core metal cylinder that is cylindrical and a core metal flange extending radially inward from one end in an axial direction of the core metal cylinder; and
a seal member including a base portion joined to the core metal and a seal lip portion extending from the base portion,
wherein the rotary seal is used in a state where the sleeve is attached to a steel-made radially inner member and the core metal cylinder is attached to a steel-made radially outer member, and
at least one of (i) a metal fitting portion between the sleeve and the radially inner member, and (ii) an outside-air side surface of the slinger including an outside-air side end portion of the metal fitting portion, is provided with at least one of a silane-based adhesive layer containing powder of metal having a higher ionization tendency than iron, a thermosetting resin adhesive layer containing powder of metal having a higher ionization tendency than iron, and a coating film containing powder of metal having a higher ionization tendency than iron.

2. The rotary seal according to claim 1, wherein
the core metal is made of stainless steel, and
at least one of (i) a metal fitting portion between the core metal cylinder and the radially outer member, and (ii) an outside-air side surface of the core metal including an outside-air side end portion of the fitting portion, is provided with at least one of the silane-based adhesive layer containing powder of metal having a higher ionization tendency than iron, the thermosetting resin adhesive layer containing powder of metal having a higher ionization tendency than iron, and the coating film containing powder of metal having a higher ionization tendency than iron.

3. A rotary seal comprising:
a stainless steel-made core metal including a core metal cylinder that is cylindrical and a core metal flange extending radially inward or outward from one end in an axial direction of the core metal cylinder; and
a seal member including a base portion joined to the core metal and a seal lip portion extending from the base portion,
wherein the rotary seal is used in a state where the core metal cylinder is attached to a steel-made radially outer member or a steel-made radially inner member, and
at least one of (i) a metal fitting portion between the core metal cylinder and the radially outer member or between the core metal cylinder and the radially inner member, and (ii) an outside-air side surface of the core metal including an outside-air side end portion of the metal fitting portion, is provided with at least one of a silane-based adhesive layer containing powder of metal having a higher ionization tendency than iron, a thermosetting resin adhesive layer containing powder of metal having a higher ionization tendency than iron, and a coating film containing powder of metal having a higher ionization tendency than iron.

4. The rotary seal according to any one of claims 1 to 3, wherein the metal having a higher ionization tendency than the iron is zinc, aluminum, or magnesium, and each of the silane-based adhesive layer, the thermosetting resin adhesive layer, and the coating film contains one kind or a plurality of kinds of powders of the zinc, the aluminum, and the magnesium.

5. The rotary seal according to any one of claims 1 to 4, wherein each of the silane-based adhesive layer, the thermosetting resin adhesive layer, and the coating film contains the powder of the metal having a higher ionization tendency than the iron, a content of the powder when dried being 75% by weight or more and 98% by weight or less.
